# EUROPEAN PATENT APPLICATION

(11) **EP 1 736 962 A1**
(43) Date of publication of application: **27.12.2006**
(21) Application number: 05013460.0
(22) Date of filing: 22.06.2005
(51) Int. Cl.: G10L 13/04

(54) **System for generating speech data**

(71) Applicant: Harman/Becker Automotive Systems GmbH, 76307 Karlsbad (DE)
(72) Inventor: Moder, Thomas, 89257 Illertissen (DE); Krippgans, Thomas, 89077 Ulm (DE)
(74) Representative: Bertsch, Florian Oliver

(57) **Abstract**

The present invention relates to a system for generating speech data for a telecommunication equipment or automotive infotainment equipment, which comprises a user interface (111) for inputting text data and selecting a target voice, a first transmitting unit (112) for transmitting the text data to a converting unit (150), a database (155) containing data sets with different voice characteristics, the converting unit (150) converting the text data into speech data on the basis of the target voice characteristic, a second transmitting unit (153) for transmitting the speech data to the telecommunication equipment or automotive infotainment equipment, where the speech data are used when a predetermined operating mode of the telecommunication equipment or automotive infotainment equipment is activated.

## Description

This invention relates to a system and to a method for generating speech data for a telecommunication or automotive infotainment equipment or automotive infotainment equipment. The invention relates in particular to a mobile communication unit or infotainment unit in a car for which personalized speech data can be generated.

Recently, the use of audio files in a telecommunication equipment or automotive infotainment equipment comprising a mobile communication unit has become a wide-spread phenomenon. Furthermore, the development of compression techniques for audio data has helped to develop new products and a new business in which the user can download audio files from an internet portal for personal use. One of these compression schemes for compressing audio data is the MP3 format. In this format, the compression technique is based on the fact that the data volume of the audio data can be reduced without notice of the user, since the user does hardly notice the omission of several frequency components of the audio data. The compressed audio files can be downloaded to the telecommunication equipment or automotive infotainment equipment.

In the art it has also be known to use these compressed audio data in mobile communication units, e.g. in cellular phones, for the ring tone of the cellular phone.

In this context the need has arisen to provide further possibilities of personalizing the operating mode of the telecommunication equipment or automotive infotainment equipment.

This need is met by a system and by a method for generating speech data as mentioned in the independent claims. In the dependent claims preferred embodiments of the invention are described.

Preferably, the invention relates to a system for generating speech data for a telecommunication equipment or automotive infotainment equipment, the system comprising a user interface for inputting text data and for selecting a target voice. The user can determine the text data for which speech data should be generated and can select a target voice which should be used for the speech data. Additionally, a first transmitting unit is provided for transmitting the text data to a converting unit. Furthermore, a database may be provided which contains data sets having different voice characteristics, the converting unit converting the text data into speech data on the basis of the target voice characteristic. The user can select a target voice from a selection of voices, each voice having its own voice characteristic. Additionally, a second transmitting unit is provided for transmitting the speech data to the telecommunication equipment or automotive infotainment equipment. In the telecommunication equipment or automotive infotainment equipment the generated speech data are used when a predetermined operating mode of the telecommunication equipment or automotive infotainment equipment is activated. According to the invention, the telecommunication equipment or automotive infotainment equipment can be configured in such a way that, when a predetermined operating mode of the telecommunication equipment is used or enabled, speech reproducing a text which can be determined by the user is used.

Additionally, the voice can be selected which is used for reproducing the text.

According to a preferred embodiment of the invention, the converting unit is a text-to-speech converting unit, where the text data input by the user via the user interface are converted into speech data. For converting the text data into speech data a database is provided which contains data sets, each data set comprising a predetermined voice characteristic. Preferably, the voice characteristics used for generating the voice data are voice characteristics of well-known people. This means that when the text data are converted to speech data, the listener gets the impression that the selected well-known person speaks the text determined by the user. The speech data of the well-known person, be it a politician, a sportsman, a popstar, or a well-known person of any other field, is then used in combination with a predetermined operating mode of the telecommunication equipment. Whenever said operating mode of the telecommunication equipment is activated, the user of the telecommunication equipment can configure the equipment in such a way that, instead of using the voice of the user or instead of using any other tone or sound of the telecommunication equipment, a voice and the text determined by the user are used.

Preferably, the telecommunication equipment comprises at least a mobile communication unit, a voice messaging unit and a switching unit. The mobile communication unit is the unit which is operated by the user and can be a cellular phone or a digital personal assistant (PDA) or any other mobile communication unit or automotive infotainment equipment. As it is known in the art, the mobile communication unit has a voice messaging service which is used when the user of the mobile communication unit does not answer a telephone call. This voice messaging unit is not necessarily part of the mobile communication unit. In mobile telecommunication systems the voice messaging unit is operated by the network operator. The user can configure the voice messaging unit to a certain extent by determining the text which is used in the telephone answering machine. Additionally, a switching unit is provided which controls the availability of the user and which determines whether a third person who tries to reach the user of the mobile communication unit hears whether the mobile communication unit is busy or whether the ring tone is activated. According to the invention the user can use the configured speech data in any part of the telecommunication equipment, be it the mobile communication unit itself, the voice messaging unit, or the switching unit, when a predetermined operating mode of any of the three units mentioned above is activated.

According to a preferred embodiment of the invention, the speech data may be used for generating a message for the answering machine of the telecommunication equipment. In this case a voice of a well-known person reads the text determined by the user of the answering machine, when the user is not able to answer the call. According to another embodiment of the invention, the speech data are used instead of the ring tone of the mobile communication unit. Instead of using the ring tones provided by the mobile communication unit, the user can generate speech data of a well-known voice, which are used instead of the ring tone, when the telephone is ringing.

According to another embodiment of the invention, the speech data are used when the dial tone of the mobile communication unit is activated. When a third person tries to reach the user of said mobile communication unit, he/she hears the well-known voice reciting the text instead of the dial tone. It should be understood that the generated voice data can be used in any context in the telecommunication equipment or for any operating mode, where sound is generated by any part of the telecommunication equipment.

According to a preferred embodiment of the invention, this system for generating speech data further comprises an internet or wireless portal accessible to a plurality of users, the users accessing the internet portal for inputting the text data. The internet portal can be accessed by using a fixedly installed computer terminal which is connected to the internet. However, it is also possible that the internet portal is accessed by using the mobile communication unit itself and known techniques to display information provided in the internet on a mobile communication unit, e.g. with the WAP technology. The user accessing the internet portal can input the text data which he/she wishes to convert into speech data.

Preferably, the internet portal verifies the authorization of the user or the validity of an access code before granting access to the user interface. The system may be arranged in such a way that an access code is necessary for using the text-to-speech conversion. Preferably, the user has to be identified before using the system for generating speech data. When the user uses the mobile communication unit itself for entering the text data and accesses the internet portal via the mobile communication unit, the user is identified since the mobile communication unit using the wireless telecommunication network is known to the operating authority.

It is also possible that the user has to call a certain hotline for receiving the access code, the access code being used for enabling the speech generating system.

According to a preferred embodiment, the system for generating speech data cannot be used free of charge. Therefore, the user has to be identified, so that the operating authority can charge the user for the text-to-speech conversion. As mentioned above, the user interface and the first transmitting unit may be comprised in the mobile communication unit. This means that the text data are input into the mobile communication unit and are then transmitted to the converting unit via a wireless communication network. Preferably, the wireless communication network is the telecommunication network. It should be understood that it is also possible to input the text data in a fixedly arranged computer terminal and to communicate with the internet portal by using wired connections.

Preferably, the system further comprises a compression unit for compressing the generated speech data into a data format which can be used for transmitting the speech data to the mobile communication unit via the wireless communication network. When the speech data are stored in a compressed way, they can be handled more easily and can be transmitted with less efforts than it would be the case if the speech data were not provided in a compressed way. In the art, different possibilities of compressing audio data are known (e.g., MP3, AVI, WNA, WAV, AAC, ATRAC or other methods). In the compressed format, the speech data can be transmitted to the telecommunication equipment more easily.

According to another embodiment of the invention the user interface further comprises a tone pitch determination unit by which the user can determine the pitch frequency of the speech data to be generated from the text data. The tone pitch determination unit can help to generate different voices and makes it possible that the selected target voice even sings the text chosen by the user. By using midi representations of songs, a target voice can even sing a predetermined song.

As mentioned above, it may be helpful to identify the user of the telecommunication equipment. To this end a user identification unit may be provided which identifies the user of the mobile communication unit and which is able to generate an invoice to the user for converting the text data to speech data. According to the invention, the user can freely determine the text which is to be converted in the text-to-speech converting unit. The speech data use a voice characteristic of a well-known person. This voice characteristic may be generated by using a person who is able to imitate the voice of the target voice. In text-to-speech systems which are able to convert any unknown text, phonetic rules may be provided. These phonetic rules allow the generation of any speech data for the selected target voice. Preferably, each data set of the database comprises the phonetic rules which are necessary for generating the speech data for the selected target voice.

According to a preferred embodiment, the text data may be transmitted to the internet portal by using a messaging service, e.g. an SMS. Preferably, the system further comprises a message passer for passing a message received from the first transmitting unit and for extracting the text data from the message. When the text data are extracted, the latter are forwarded to the converting unit which then converts the text data into speech data.

The invention further relates to a method for generating speech data for the telecommunication equipment, comprising the steps of receiving text data input into a user interface and receiving a target voice selected from a list of different voices. In the next step, the text data and the selected target voice are transmitted to a converting unit which convertes the received text data into speech data in accordance with the voice characteristic of the target voice. The speech data are then transmitted to the telecommunication equipment. In the telecommunication equipment, the speech data are linked to a predetermined operating mode of the telecommunication equipment, and the speech data are used when said predetermined operating mode of the telecommunication equipment is activated. By linking the speech data to a predetermined operating mode the speech data are used whenever said operating mode is activated, e.g., when the answering machine is activated, when the ring tone of the mobile communication unit is activated or when the dial tone is activated, the speech data are used. Preferably, the text data are input into the internet portal, the portal transmitting the text data to the converting unit for generating the speech data. When the text data are input into the mobile communication unit of the telecommunication equipment itself, they are transferred to the converting unit by using a wireless message transmitting technology, e.g. the SMS technology. Furthermore, it is possible to transmit the generated speech data back to the telecommunication equipment by using the same wireless message transmitting technology, e.g. MMS (multimedia messaging standard). The provider of the telecommunication system can provide a predetermined telephone number to which the SMS is sent. The generated speech data are then sent back as an MMS.

Furthermore, it is possible that the selected target voice sings the text determined by the user. The user can determine the melody which should be used for the speech data. In this case the converting unit converts the text data into sung speech data in accordance with the melody data.

Further advantages of the present invention may become apparent when studied with reference to the accompanying drawings, in which:
Fig. 1 shows a schematic view of a system for generating speech data for a telecommunication equipment,
Fig. 2 shows a screen of a user interface for inputting the text data, and
Fig. 3 shows a flowchart for the text-to-speech conversion.

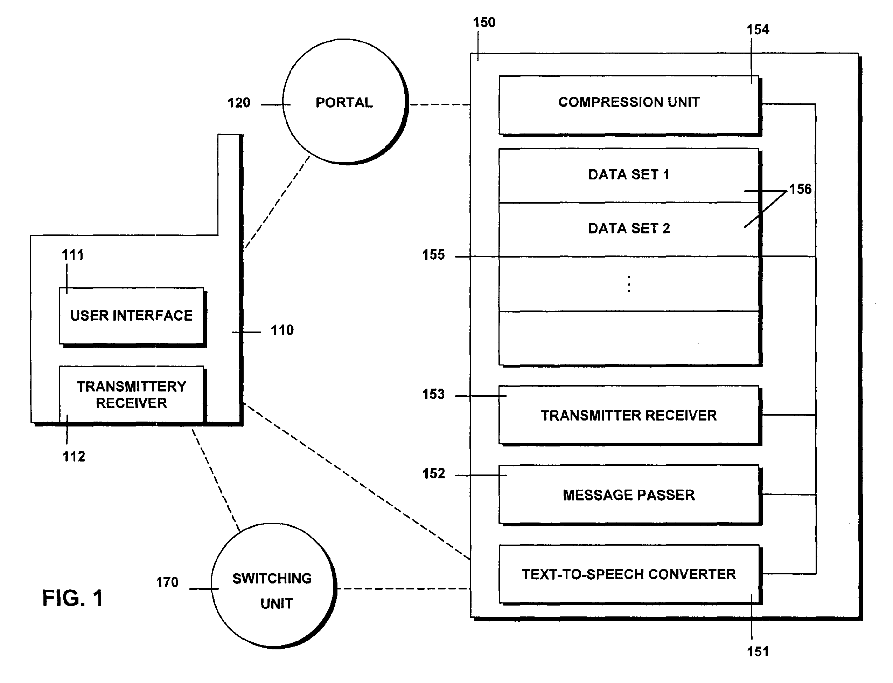

In Fig. 1 the system for generating speech data for a telecommunication equipment is schematically shown. The system comprises a communication unit 110. The mobile communication unit comprises a user interface which can, inter alia, be used for inputting text data. Mobile communication units, e.g. cellular phones or PDAs, are known in the art, so that a detailed description of the mobile communication unit is omitted. For the sake of clarity only the components which are needed for the understanding of the invention are described.

The mobile communication unit can be used for inputting the text data which are then transmitted to an internet portal 120 via a telecommunication network by using the transmitter/receiver 112 of the mobile communication unit 110. It should be understood that the communication between the portal 120 and the communication unit 110 may be carried out by using wired connections.

The internet portal 120 is normally accessible to a plurality of users. When the user has accessed the web-page of the internet portal and has input the text data, the text data are transmitted to a converting unit 150 which converts the text data into speech data. Again, the text data can be transmitted to the converting unit 150 by using wireless or wired transmission technologies. The converting unit comprises a text-to-speech converter 151 which is able to convert the text data into speech data. By way of example the text data may be contained in an SMS. For extracting the text data from the SMS the converting unit comprises a message passer 152 which passes on the message received from the portal 120, which extracts the text data from the message, and which forwards the text data to the text-to-speech converter 151.

The system may further comprise a transmitter/receiver 153 for receiving data from the portal 120 and for transmitting data to the mobile communication unit 110. A compression unit 154 may be provided for compressing the generated speech data, so that these speech data can be transmitted more easily to the mobile communication unit 110 by using a wireless communication network or by using a wired telecommunication network, e.g. the internet.

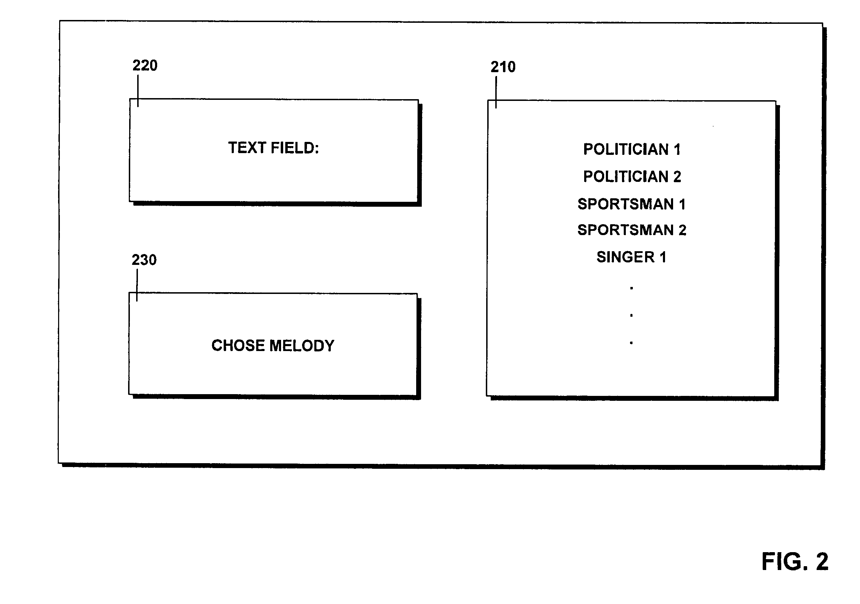

For generating the speech data a database 155 is accessed. The database comprises different datasets 156, each dataset containing the voice characteristics of one person. Additionally, the data sets may further comprise the phonetic rules which are necessary for generating the speech data from any text data. As can also be seen from Fig. 2, the user can select a target voice from a list 210 of well-known people. The voices of the people shown in the list 210 may be generated by people which are able to imitate the voices of well-known personalities.

In Fig. 2 a display is shown which is accessible via the internet portal 120 and which can be used for inputting the text data. A text data field 220 is provided which the user can use for inputting the text. E.g., the user can select a text which should be used when the answering machine of the telecommunication equipment is activated. The user may enter a text such as "Currently, I am not available. Please leave a message after the beep" or a text, e.g., "I am the secretary of Mr./Ms...... My boss is currently not available. Please leave a message after the beep.". At the same time, the voice of a well-known politician or of a well-known TV-star may be selected from the list 210. This text is then transmitted to the converting unit 150, where the text-to-speech converter 151 converts the text data to speech data on the basis of the target voice characteristic stored in the database 155. If the user wants the voice to sing the text, a melody input field 230 is provided, where the user can input the melody which should be used for the sung text. He melody impart field may offer also a list of midi representations of songs.

When the data are converted into speech data, the speech data are transmitted to the telecommunication equipment. Depending on the operating mode for which the speech data should be used the speech data may be transmitted to a switching unit 170 or any other kind of telecom service equipment (mailserver, voicemail server, NR platform). The switching unit 170 is part of the telecommunication network in which the mobile communication unit 110 can be used. The switching unit controls the availability of the mobile communication unit. These switching units are known in the art, so that a detailed description thereof can be omitted. When it is decided that the speech data should be used instead of the dial tone when a third person tries to reach the user of the mobile communication unit 110, the speech data have to be transmitted to the switching unit, since the dial tone or the busy tone is generated by the switching unit 170.

When the speech data are used in the ringing tone operating mode, the speech data are transmitted to the mobile communication unit 110 itself where they are stored in such a way that, every time the telephone is ringing, the generated speech data are used instead of a ringing tone which is normally used. When the speech data are used for the automatic answering machine, the speech data may also be transmitted to the switching unit which operates the answering machine of the mobile communication unit 110. Whenever a third person tries to reach the user of the mobile communication unit, and the user does not answer the call, the speech data are activated in the answering machine.

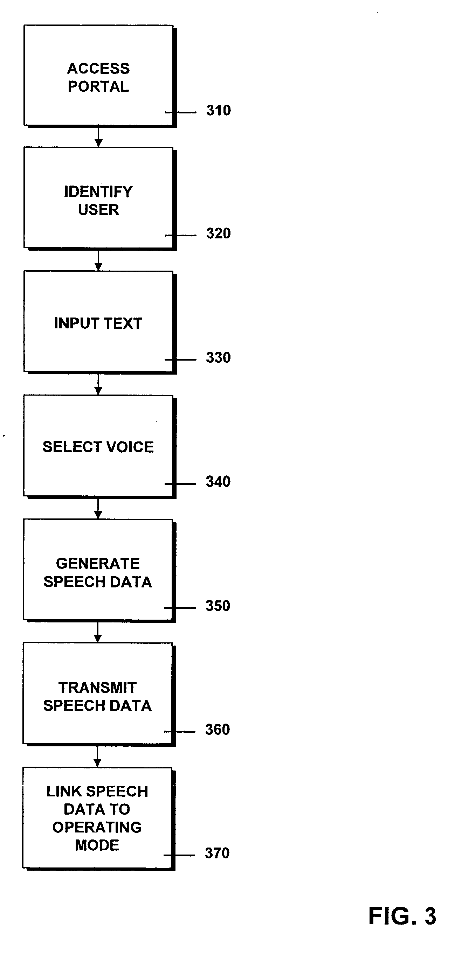

In Fig. 3 the different steps are shown for linking the speech data to a predetermined operating mode of the telecommunication equipment. In a first step 310 the internet portal 120 is accessed. In a next step 320 the user of the mobile communication unit has to be identified. This may be done by entering an access code. The user may get the access code by calling a hotline or by registering at the portal 120. If the user uses the mobile communication unit and the telecommunication network for accessing the portal, the user is normally identified by the mobile communication unit itself. In the next step 330 the text from the user has to be input and a voice has to be selected which should be used for the voice data (step 340). Then the text data and the selected target voice are transmitted to the converting unit 150 where the data speech data are generated by the text-to-speech converter 151 with the help of the data set 156 which corresponds to the selected voice (step 350).

In the next step the generated speech data are transmitted to the telecommunication equipment (step 360). The user has to determine for which operating mode the speech data should be used, so that the speech data are linked to a predetermined operating mode (step 370).

After finishing step 370 the speech data are used every time the predetermined operating mode is activated, e.g., when the mobile communication unit is ringing, when the answering machine is activated and the message of the answering machine is read, or when any other operating mode determined by the user is activated.

This invention helps to further personalize a mobile communication equipment and provides a suprising effect for the person who hears the voice of well-known people when contacting the user of the mobile communication unit.

## Claims

1. System for generating speech data for a telecommunication equipment or automotive infotainment equipment, comprising
- a user interface (111) for inputting text data and selecting a target voice,
- a first transmitting unit (112) for transmitting the text data to a converting unit (150),
- a database (155) containing data sets with different voice characteristics, the converting unit (150) converting the text data into speech data on the basis of the target voice characteristic,
- a second transmitting unit (153) for transmitting the speech data to the telecommunication equipment, where the speech data are used when a predetermined operating mode of the telecommunication equipment is activated.

2. System according to claim 1, **characterized by** further comprising an internet portal (120) accessible to a plurality of users, the users accessing the internet portal for inputting the text data.

3. System according to claim 2, wherein the internet portal (120) verifies the authorisation of a user or the validity of an access code before granting access to the user interface.

4. System according to any of the preceding claims, wherein the telecommunication equipment comprises at least one of a mobile communication unit (110), a voice messaging unit, and a switching unit (170).

5. System according to claim 4, **characterized in that** the user interface and the first transmitting unit are comprised in the mobile communication unit, the text data input into the mobile communication unit being transmitted to the converting unit (150) via a wireless communication network.

6. System according to any of the preceding claims, **characterized in that** the converting unit is a text-to-speech converting unit (151), the database (155) of the converting unit comprising several voice characteristics of well-known people.

7. System according to any of the preceding claims, **characterised by** further comprising a compression unit (154) for compressing the generated speech data into a data format which can be used for transmitting the speech data to the mobile communication unit via a wireless communication network.

8. System according to any of the preceding claims, **characterised in that** the user interface comprises a tone pitch determination unit by which the user can determine the pitch frequency of the speech data to be generated from the text data.

9. System according to any of the preceding claims, **characterised by** further comprising a user identification unit which identifies the user of the mobile communication unit and which generates an invoice for converting the text data to speech data for the user.

10. System according to any of the preceding claims, wherein each data set comprises the phonetic rules which are necessary for generating the speech data for the selected target voice.

11. System according to any of the preceding claims, **characterised by** further comprising a message passer (152) for passing a message received from the first transmitting unit, for extracting the text data from the message, and for forwarding the text data to the converting unit.

12. Method for generating speech data for a telecommunication equipment or automotive infotainment equipment, comprising the following steps:
- receiving text data input into a user interface and a target voice selected from a list of different voices,
- transmitting the text data and the selected target voice to a converting unit which converts the received text data into speech data in accordance with the voice characteristic of the target voice,
- transmitting the speech data to the telecommunication equipment or automotive infotainment equipment, and
- linking the speech data to a predetermined operating mode of the telecommunication equipment or automototive infotainment equipment for using the speech data when said predetermined operating mode of the telecommunication equipment or automotive infotainment equipment is activated.

13. Method according to claim 12, wherein the text data are input into an internet portal accessible to a plurality of users, the portal transmitting the text data to the converting unit for generating the speech data.

14. Method according to claim 12 or 13, wherein the text data are input into a mobile communication unit of the telecommunication equipment and transferred to the converting unit by using a wireless message transmitting technology.

15. Method according to any of claims 12 to 14, further comprising at least one of the following steps:
- identifying the user of the mobile communication unit (110),
- converting the generated speech into compressed speech data, and
- transmitting the compressed speech data to the mobile communication unit by using a wireless data transmitting technology.

16. Method according to any of claims 12 to 15, wherein the speech data are generated by using the voice characteristics of well-known people.

17. Method according to any of claim 12 to 16, wherein the speech data are used for generating a message for the answering machine of the telecommunication equipment, for generating the ring tone of the telecommunication equipment or automotive infotainment equipment, for generating the dial tone, and/or for generating an audio file.

18. Method according to any of claims 12 to 17, further comprising the step of receiving melody data corresponding to the text data, wherein the converting unit converts the text data into sung speech data in accordance with the melody data.
